# EUROPÄISCHE PATENTSCHRIFT

(11) **EP 0 980 450 B1**
(45) Veröffentlichungstag und Bekanntmachung des Hinweises auf die Patenterteilung: **02.10.2002**
(21) Anmeldenummer: 98924201.1
(22) Anmeldetag: 24.04.1998
(51) Int. Cl.: D21H 21/02, D21H 17/45, D21H 17/54

(54) **VERFAHREN ZUR HERSTELLUNG VON PAPIER, PAPPE UND KARTON**
METHOD FOR PRODUCING PAPER, PAPERBOARD AND CARDBOARD
PROCEDE DE PRODUCTION DE PAPIER, DE CARTON SOUPLE ET DE CARTON EPAIS

(30) Priorität: 06.05.1997 DE 19719059
(43) Veröffentlichungstag der Anmeldung: 23.02.2000
(73) Patentinhaber: BASF AKTIENGESELLSCHAFT, 67056 Ludwigshafen (DE)
(72) Erfinder: ETTL, Roland, D-67454 Hassloch (DE); MEIXNER, Hubert, D-67069 Ludwigshafen (DE); ESSER, Anton, D-68199 Mannheim (DE); SCHOLZ, Rainer, D-67125 Dannstadt-Schauernheim (DE); MAHR, Norbert, D-67065 Ludwigshafen (DE); STEUERLE, Ulrich, D-69124 Heidelberg (DE); HÖNE, Matthias, D-69226 Nussloch (DE); LORENZ, Klaus, D-67549 Worms (DE)
(86) Internationale Anmeldenummer: EP9802446
(87) Internationale Veröffentlichungsnummer: WO98050630

(56) Entgegenhaltungen:
- EP-A- 0 649 941
- EP-A- 0 674 046
- WO-A-94/12560
- WO-A-97/05330
- DE-A- 3 301 670
- US-A- 3 923 745
- DATABASE WPI Section Ch, Week 9207 Derwent Publications Ltd., London, GB; Class A14, AN 92-052266 XP002075024 & JP 03 294 596 A (DICK-HERCULES KK)

## Beschreibung

Die Erfindung betrifft ein Verfahren zur Herstellung von Papier, Pappe und Karton durch Entwässern eines Störstoffe enthaltenden Papierstoffs in Gegenwart von Fixiermitteln und die Verwendung von Umsetzungsprodukten als Fixiermittel für Störstoffe bei der Herstellung von Papier, Pappe und Karton aus Störstoffe enthaltenden Papierstoffen.

Aus der EP-A-0 438 707 ist ein Verfahren zur Herstellung von Papier, Pappe und Karton durch Entwässern eines Störstoffe enthaltenden Papierstoffs in Gegenwart von Fixiermitteln und kationischen Retentionsmitteln bekannt, wobei man als Fixiermittel hydrolysierte Homo- und/oder Copolymerisate des N-Vinylformamids mit einem Hydrolysegrad von mindestens 60 % einsetzt. Bei der Herstellung von Papier wird in der Praxis Wasser verwendet, das zumindest teilweise oder vollständig von der Papiermaschine zurückgeführt wird. Es handelt sich hierbei entweder um geklärtes oder ungeklärtes Siebwasser sowie um Mischungen solcher Wasserqualitäten. Das zurückgeführte Wasser enthält mehr oder weniger größere Mengen an sogenannten Störstoffen, die bekanntlich die Wirksamkeit von kationischen Retentions- und Entwässerungsmitteln sehr stark beeinträchtigen. Bei den Störstoffen kann es sich um wasserlösliche bzw. kolloidal gelöste Stoffe sowie um wasserunlösliche Produkte handeln.

Aufgrund der Wiederverwendung von Fasern aus Altpapier zur Herstellung von Papier, Pappe und Karton gelangen wasserunlösliche, klebende Verunreinigungen, sogenannte Stickies und White Pitch (aus Papierstreichfarben stammende Bindemittel) in den Wasserkreislauf von Papiermaschinen und verursachen dadurch Produktionsstörungen. Die klebenden Verunreinigungen lagern sich dabei bevorzugt an Sieben, Filzen, Walzen und anderen bewegten Teilen der Papiermaschine ab. Arbeitet man in Abwesenheit von Fixiermitteln als Prozeßhilfsmittel, kann sich die Anwesenheit von Störstoffen auf unterschiedliche Weise bemerkbar machen. Beispielsweise bilden sich in der Papierbahn Fehlstellen aus, meist in Form von dünnen Stellen bis hin zu Löchern, die Abrisse in der Papiermaschine oder auch in der Druckmaschine verursachen können.

Als Störstoffquellen für Stickies kommen neben Harzen und Lignin-Bestandteilen, die bei der Faserherstellung durch Kochung und mechanische Aufbereitung aus dem Holz herausgelöst werden, hauptsächlich Dispersionen, natürliche kolloidale Systeme wie Stärke, Casein und Dextrine sowie Schmelzkleber in Betracht. Im einzelnen handelt es sich hierbei um Harze, Ligninreste, Klebstoffe aus der Rückenleimung von Büchern, Kleber von Haftetiketten und Briefumschlägen sowie um White Pitch. Die klebenden Verunreinigungen werden bei der Aufbereitung von Altpapierfasern in den meisten Fällen nur ungenügend aus dem Stoffgemisch entfernt. Um die Klebrigkeit der unerwünschten Verunreinigungen zu reduzieren, hat man dem Papierstoff bereits seit langer Zeit Substanzen mit einer großen Oberfläche zugesetzt, z.B. Talkum, Kreide oder Bentonit. Die klebenden Verunreinigungen sollen dadurch in ihrer Klebrigkeit deutlich reduziert werden, vgl. Tappi Press 1990, Vol. 2, Seiten 508 u. 512. Der Nachteil dieser Behandlung von klebrigen Verunreinigungen liegt in der Scherempfindlichkeit und in der begrenzten Retention der so behandelten Teilchen bei der Papierherstellung. Gelegentlich eingesetzte Dispergiermittel wie Ligninsulfonate, Naphthalinsulfonate, Nonylphenole oder alkoxylierte Fettalkohole verhindern zwar eine Agglomeration von Stickies zu Teilchen mit einer für den Papierherstellungsprozeß störenden Größe, jedoch tritt bei Einsatz dieser Prozeßhilfsmittel gelegentlich ein starkes Schäumen der Papierstoffe auf.

Aus der EP-A-0 649 941 ist ein Verfahren zur Kontrolle des Absetzens klebender Verunreinigungen aus Papierstoffsuspensionen bekannt. Zur Inhibierung der Ablagerung von White Pitch verwendet man Polymere, die N-Vinylformamid-, alkylsubstituierte N-Vinylcarbonsäureamid- oder die daraus durch Hydrolyse entstehenden Vinylamineinheiten enthalten. Aus der EP-A-0 061 169 ist bekannt, daß zur Entfernung anionischer Substanzen aus Kreislaufwässern der Papierherstellung kationische Polyelektrolyte verwendet werden können, die durch Umsetzung von beispielsweise Polyethylenimin oder Polyvinylamin mit Benzylchlorid oder Styroloxid erhältlich sind und wobei mindestens 10 % der Aminoalkylgruppen einen aromatischen Substituenten tragen.

Aus der WO-A-94/12560 sind Kondensationsprodukte von Polyalkylenpolyaminen bekannt, die durch partielle Amidierung von Polyalkylenaminen mit Carbonsäuren, Carbonsäureestern, Carbonsäureanhydriden oder Carbonsäurehalogeniden und Vernetzung der teilweise amidierten Polyalkylenpolyamine mit mindestens bifunktionellen Vernetzern erhältlich sind, wobei man auf einen Gewichtsteil der partiell amidierten Polyalkylenpolyamine 0,001 bis 10 Gew.-Teile eines Vernetzers einsetzt. Diese Kondensationsprodukte werden als Entwässerungs-, Flockungs- und Retentionsmittel sowie als Fixiermittel bei der Herstellung von Papier verwendet.

Der vorliegenden Erfindung liegt die Aufgabe zugrunde, für den Papierherstellungsprozeß Fixiermittel zur Verfügung zu stellen, die sowohl wasserlösliche Störstoffe als auch kolloidal gelöste Störstoffe sowie wasserunlösliche klebende Verunreinigungen an den Papierfasern fixieren.

Die Aufgabe wird erfindungsgemäß gelöst mit einem Verfahren zur Herstellung von Papier, Pappe und Karton durch Entwässern eines Störstoffe enthaltenden Papierstoffs in Gegenwart von Fixiermitteln, wenn man als Fixiermittel Umsetzungsprodukte einsetzt, die durch Reaktion von unvernetzten Amino- und/oder Ammoniumgruppen enthaltenden Polymeren aus der Gruppe der
- Vinylamineinheiten enthaltenden Polymerisate
- Polyalkylenpolyamine
- mit Ethylenimin gepfropften Polyamidoamine,
- Polydiallyldimethylammoniumchloride
- Dialkylaminoalkylacrylamid-Einheiten oder Dialkylaminomethacrylamid-Einheiten enthaltenden Polymeren und
- Polyallylamine und
- Dicyandiamid und Formaldehyd-Kondensate
mit Reaktivleimungsmitteln für Papier im Gewichtsverhältnis Polymer zu Reaktivleimungsmittel von 15 000 : 1 bis 1 : 5 erhältlich sind.

Gegenstand der Erfindung ist außerdem die Verwendung von Umsetzungsprodukten, die durch Reaktion von unvernetzten Amino- und/oder Ammoniumgruppen enthaltenden Polymeren aus der Gruppe der
- Vinylamineinheiten enthaltenden Polymerisate
- Polyalkylenpolyamine
- mit Ethylenimin gepfropften Polyamidoamine,
- Polydiallyldimethylammoniumchloride
- Dialkylaminoalkylacrylamid-Einheiten oder Dialkylaminomethacrylamid-Einheiten enthaltenden Polymeren und
- Polyallylamine und
- Dicyandiamid-Formaldehyd-Kondensate
mit Reaktivleimungsmitteln für Papier im Gewichtsverhältnis Polymer zu Reaktivleimungsmittel von 15 000 : 1 bis 1 : 5 erhältlich sind, als Fixiermittel für wasserlösliche und für wasserunlösliche Störstoffe bei der Herstellung von Papier, Pappe und Karton aus Störstoffe enthaltenden Papierstoffen.

Als Faserstoffe zur Herstellung der Pulpen kommen sämtliche dafür gebräuchlichen Qualitäten in Betracht, z. B. Holzstoff, gebleichter und ungebleichter Zellstoff sowie Papierstoffe aus allen Einjahrespflanzen. Zu Holzstoff gehören beispielsweise Holzschliff, thermomechanischer Stoff (TMP), chemothermomechanischer Stoff (CTMP), Druckschliff, Halbzellstoff, Hochausbeute-Zellstoff und Refiner Mechanical Pulp (RMP). Als Zellstoffe kommen beispielsweise Sulfat-, Sulfit und Natronzellstoffe in Betracht. Vorzugsweise verwendet man die ungebleichten Zellstoffe, die auch als ungebleichter Kraftzellstoff bezeichnet werden. Geeignete Einjahrespflanzen zur Herstellung von Papierstoffen sind beispielsweise Reis, Weizen, Zuckerrohr und Kenaf. Zur Herstellung der Pulpen wird auch Altpapier allein oder in Mischung mit anderen Fasern verwendet. Zu Altpapier gehört auch sogenannter gestrichener Ausschuß, der aufgrund des Gehalts an Bindemitteln für Streich- und Druckfarben Anlaß für den White Pitch gibt. Anlaß zur Bildung von sogenannten Stickies geben die aus Haftetiketten und Briefumschlägen stammenden Kleber sowie Klebstoffe aus der Rückenleimung von Büchern sowie sogenannte Hotmelts.

Die genannten Faserstoffe können allein oder in Mischung untereinander verwendet werden. Die Pulpen der obenbeschriebenen Art enthalten wechselnde Mengen an wasserlöslichen und wasserunlöslichen Störstoffen. Die Störstoffe können beispielsweise mit Hilfe des CSB-Wertes oder auch mit Hilfe des sogenannten kationischen Bedarfs quantitativ erfaßt werden. Unter kationischem Bedarf wird dabei diejenige Menge eines kationischen Polymeren verstanden, die notwendig ist, um eine definierte Menge des Siebwassers zum isoelektrischen Punkt zu bringen. Da der kationische Bedarf sehr stark von der Zusammensetzung des jeweils für die Bestimmung verwendeten kationischen Polymeren abhängt, verwendet man zur Standardisierung ein gemäß Beispiel 3 der DE-B-2 434 816 erhaltenes Kondensationsprodukt, das durch Propfen eines Polyamidoamins aus Adipinsäure und Diethylentriamin mit Ethylenimin und anschließender Vernetzung mit einem Polyethylenglykoldichlorhydrinether erhältlich ist. Die Störstoffe enthaltenden Pulpen haben beispielsweise CSB-Werte von 300 bis 40 000, vorzugsweise 1000 bis 30 000 mg Sauerstoff pro kg der wässrigen Phase und einen kationischen Bedarf von mehr als 50 mg des genannten kationischen Polymeren pro Liter Siebwasser.

Die für die Herstellung der Fixiermittel als Ausgangsprodukte eingesetzten Amino- und/oder Ammoniumgruppen enthaltenden Polymeren sind bekannt. Es handelt sich hierbei beispielsweise um synthetische kationische Verbindungen wie Vinylamineinheiten enthaltende Polymerisate. Zu ihrer Herstellung geht man beispielsweise von offenkettigen N-Vinylcarbonsäureamiden der Formel 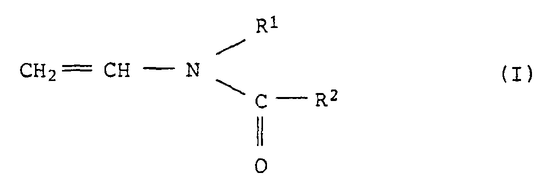 aus, in der R¹ und R² gleich oder verschieden sein können und für Wasserstoff und C₁- bis C₆-Alkyl stehen. Geeignete Monomere sind beispielsweise N-Vinylformamid (R¹=R²=H in Formel I) N-Vinyl-N-methylformamid, N-Vinylacetamid, N-Vinyl-N-methylacetamid, N-Vinyl-N-ethylacetamid, N-Vinyl-N-methylpropionamid und N-Vinylpropionamid. Zur Herstellung der Polymerisate können die genannten Monomeren entweder allein, in Mischung untereinander oder zusammen mit anderen monoethylenisch ungesättigten Monomeren polymerisiert werden. Vorzugsweise geht man von Homo- oder Copolymerisaten des N-Vinylformamids aus. Vinylamineinheiten enthaltende Polymerisate sind beispielsweise aus US-A-4 421 602, EP-A-0 216 387 und EP-A-0 251 182 bekannt. Sie werden durch Hydrolyse von Polymerisaten, die die Monomeren der Formel I einpolymerisiert enthalten, mit Säuren, Basen oder Enzymen erhalten.

Als monoethylenisch ungesättigte Monomere, die mit den N-Vinylcarbonsäureamiden copolymerisiert werden, kommen alle damit copolymerisierbaren Verbindungen in Betracht. Beispiele hierfür sind Vinylester von gesättigten Carbonsäuren von 1 bis 6 Kohlenstoffatomen wie Vinylformiat, Vinylacetat, Vinylpropionat und vinylbutyrat und Vinylether wie C₁- bis C₆-Alkylvinylether, z.B. Methyl- oder Ethylvinylether. Weitere geeignete Comonomere sind ethylenisch ungesättigte C₃- bis C₆-Carbonsäuren, beispielsweise Acrylsäure, Methacrylsäure, Maleinsäure, Crotonsäure, Itaconsäure und Vinylestersäure sowie deren Alkalimetall- und Erdalkalimetallsalze, Ester, Amide und Nitrile der genannten Carbonsäuren, beispielsweise Methylacrylat, Methylmethacrylat, Ethylacrylat und Ethylmethacrylat. Weitere geeignete Carbonsäureester leiten sich von Glykolen oder bzw. Polyalkylenglykolen ab, wobei jeweils nur eine OH-Gruppe verestert ist, z.B. Hydroxyethylacrylat, Hydroxyethylmethacrylat, Hydroxypropylacrylat, Hydroxybutylacrylat, Hydroxypropylmethacrylat, Hydroxybutylmethacrylat sowie Acrylsäuremonoester von Polyalkylenglykolen einer Molmasse von 500 bis 10000. Weitere geeignete Comonomere sind Ester von ethylenisch ungesättigten Carbonsäuren mit Aminoalkoholen wie beispielsweise Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat, Dimethylaminobutylacrylat und Diethylaminobutylacrylat. Die basischen Acrylate können in Form der freien Basen, der Salze mit Mineralsäuren wie Salzsäure, Schwefelsäure oder Salpetersäure, der Salze mit organischen Säuren wie Ameisensäure, Essigsäure, Propionsäure oder der Sulfonsäuren oder in quaternierter Form eingesetzt werden. Geeignete Quaternierungsmittel sind beispielsweise Dimethylsulfat, Diethylsulfat, Methylchlorid, Ethylchlorid oder Benzylchlorid.

Weitere geeignete Comonomere sind Amide ethylenisch ungesättigter Carbonsäuren wie Acrylamid, Methacrylamid sowie N-Alkylmono- und Diamide von monoethylenisch ungesättigten Carbonsäuren mit Alkylresten von 1 bis 6 C-Atomen, z.B. N-Methylacrylamid, N,N-Dimethylacrylamid, N-Methylmethacrylamid, N-Ethylacrylamid, N-Propylacrylamid und tert. Butylacrylamid sowie basische (Meth)acrylamide, wie z.B. Dimethylaminoethylacrylamid, Dimethylaminoethylmethacrylamid, Diethylaminoethylacrylamid, Diethylaminoethylmethacrylamid, Dimethylaminopropylacrylamid, Diethylaminopropylacrylamid, Dimethylaminopropylmethacrylamid und Diethylaminopropylmethacrylamid.

Weiterhin sind als Comonomere geeignet N-Vinylpyrrolidon, N-Vinylcaprolactam, Acrylnitril, Methacrylnitril, N-Vinylimidazol sowie substituierte N-Vinylimidazole wie z.B. N-Vinyl-2-methylimidazol, N-Vinyl-4-methylimidazol, N-Vinyl-5-methylimidazol. N-Vinyl-2-ethylimidazol und N-Vinylimidazoline wie N-Vinylimidazolin, N-Vinyl-2-methylimidazolin und N-Vinyl-2-ethylimidazolin. N-Vinylimidazole und N-Vinylimidazoline werden außer in Form der freien Basen auch in mit Mineralsäuren oder organischen Säuren neutralisierter oder in quaternisierter Form eingesetzt, wobei die Quaternisierung vorzugsweise mit Dimethylsulfat, Diethylsulfat. Methylchlorid oder Benzylchlorid vorgenommen wird. In Frage kommen auch Diallyldialkylammoniumhalogenide wie z.B. Diallyldimethylammoniumchloride.

Außerdem kommen als Comonomere Sulfogruppen enthaltende Monomere wie beispielsweise Vinylsulfonsäure, Allylsulfonsäure, Methallylsulfonsäure, Styrolsulfonsäure, die Alkalimetall- oder Ammoniumsalze dieser Säuren oder Acrylsäure-3-sulfopropylester in Frage.

Die Copolymerisate enthalten beispielsweise
- 99 bis 1 mol-%, vorzugsweise 95 bis 5 mol-% N-Vinylcarbonsäureamide der Formel I und
- 1 bis 99 mol-%, vorzugsweise 5 bis 95 mol-% andere, damit copolymerisierbare monoethylenisch ungesättigte Monomere
in einpolymerisierter Form.

Um Vinylamineinheiten enthaltende Polymerisate herzustellen, geht man vorzugsweise von Homopolymerisaten des N-Vinylformamids oder von Copolymerisaten aus, die durch Copolymerisieren von
- N-Vinylformamid mit
- Vinylformiat, Vinylacetat, Vinylpropionat, Acrylnitril, N-Vinylcaprolactam, N-Vinylharnstoff, Acrylsäure, N-Vinylpyrrolidon oder C₁- bis C₆-Alkylvinylethern
und anschließende Hydrolyse der Homo- oder der Copolymerisate unter Bildung von Vinylamineinheiten aus den einpolymerisierten N-Vinylformamideinheiten erhältlich sind, wobei der Hydrolysegrad z. B. 0,1 bis 100 mol-% beträgt.

Die Hydrolyse der oben beschriebenen Polymerisate erfolgt nach bekannten Verfahren durch Einwirkung von Säuren, Basen oder Enzymen. Hierbei entstehen aus den einpolymerisierten Monomeren der oben angegebenen Formel I durch Abspaltung der Gruppierung 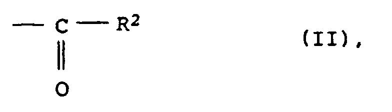 wobei R² die dafür in Formel I angegebene Bedeutung hat, Polymerisate, die Vinylamineinheiten der Formel 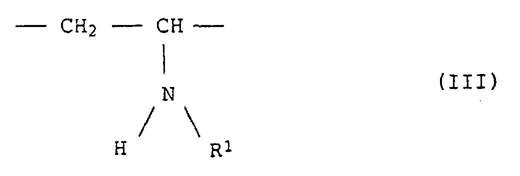 enthalten, in der R¹ die in Formel I angegebene Bedeutung hat.

Die Homopolymerisate der N-Vinylcarbonsäureamide der Formel I und ihre Copolymerisate können zu 0,1 bis 100, vorzugsweise 1 bis 99 mol-% hydrolysiert sein. In den meisten Fällen beträgt der Hydrolysegrad der Homo- und Copolymerisate 5 bis 95 mol-%. Der Hydrolysegrad der Homopolymerisate ist gleichbedeutend mit dem Gehalt der Polymerisate an Vinylamineinheiten. Bei Copolymerisaten, die Vinylester einpolymerisiert enthalten, kann neben der Hydrolyse der N-Vinylformamideinheiten eine Hydrolyse der Estergruppen unter Bildung von Vinylalkoholeinheiten eintreten. Dies ist insbesondere dann der Fall, wenn man die Hydrolyse der Copolymerisate in Gegenwart von Natronlauge durchführt. Einpolymerisiertes Acrylnitril wird ebenfalls bei der Hydrolyse chemisch verändert. Hierbei entstehen beispielsweise Amidgruppen oder Carboxylgruppen. Die Vinylamineinheiten enthaltenden Homo- und Copolymeren können gegebenenfalls bis zu 20 mol-% an Amidineinheiten enthalten, die z.B. durch Reaktion von Ameisensäure mit zwei benachbarten Aminogruppen oder durch intramolekulare Reaktion einer Aminogruppe mit einer benachbarten Amidgruppe z.B. von einpolymerisiertem N-Vinylformamid entsteht. Die Molmassen der Vinylamineinheiten enthaltenden Polymerisate betragen z.B. 1000 bis 10 Millionen, vorzugsweise 10 000 bis 5 Millionen (bestimmt durch Lichtstreuung). Dieser Molmassenbereich entspricht beispielsweise K-Werten von 5 bis 300, vorzugsweise 10 bis 250 (bestimmt nach H. Fikentscher in 5 %iger wäßriger Kochsalzlösung bei 25°C und einer Polymerkonzentration von 0.5 Gew.-%).

Die Vinylamineinheiten enthaltenden Polymeren werden vorzugsweise in salzfreier Form eingesetzt. Salzfreie wäßrige Lösungen von Vinylamineinheiten enthaltenden Polymerisaten können beispielsweise aus den oben beschriebenen salzhaltigen Polymerlösungen mit Hilfe einer Dialyse oder Ultrafiltration an geeigneten Membranen bei Trenngrenzen von beispielsweise 1000 bis 500 000 Dalton, vorzugsweise 10 000 bis 300 000 Dalton hergestellt werden. Auch die unten beschriebenen wäßrigen Lösungen von Amino- und/oder Ammoniumgruppen enthaltenden anderen Polymeren können mit Hilfe einer Dialyse oder Ultrafiltration in salzfreier Form gewonnen werden. Bei der Ultrafiltration an Membranen mit den obengenannten Trenngrenzen erreicht man außer einer Abtrennung von Salzen, die beispielsweise bei der Hydrolyse von N-Vinylformamideinheiten enthaltenden Polymerisaten mit Säuren oder Basen entstehen, auch eine Fraktionierung der Polymeren, so daß man Polymere mit engerer Molmassenverteilung M_{w}/Mₙ erhält. Die bei der Ultrafiltration als Retentat anfallenden Fraktionen an enger verteilten Polymeren ergeben bei der Umsetzung mit Reaktivleimungsmitteln Umsetzungsprodukte, die meistens eine höhere Wirksamkeit haben als Umsetzungsprodukte, die bei der Reaktion von nicht fraktionierten Polymeren gleicher Zusammensetzung mit Reaktivleimungsmitteln entstehen.

Geeignete Polyalkylenpolyamine haben beispielsweise Molmassen von mindestens 1000. Bevorzugt eingesetzte Polyalkylenpolyamine sind Polyethylenimine, sie werden beispielsweise durch Polymerisation von Ethylenimin in wäßriger Lösung in Gegenwart von säureabspaltenden Verbindungen, Säuren oder Lewis-Säuren hergestellt. Polyethylenimine haben beispielsweise Molmassen bis zu 2 Millionen, vorzugsweise von 2000 bis 1 000 000. Besonders bevorzugt werden Polyethylenimine mit Molmassen von 5000 bis 800 000 eingesetzt.

Geeignete Amino- und/oder Ammoniumgruppen enthaltende Polymere sind außerdem Polyamidoamine, die beispielsweise durch Kondensieren von Dicarbonsäuren mit Polyaminen erhältlich sind. Geeignete Polyamidoamine erhält man beispielsweise dadurch, daß man Dicarbonsäuren mit 4 bis 10 Kohlenstoffatomen mit Polyalkylenpolyaminen umsetzt, die 3 bis 10 basische Stickstoffatome im Molekül enthalten. Geeignete Dicarbonsäuren sind beispielsweise Bernsteinsäure, Maleinsäure, Adipinsäure, Glutarsäure, Korksäure, Sebacinsäure oder Terephthalsäure. Bei der Herstellung der Polyamidoamine kann man auch Mischungen von Dicarbonsäuren einsetzen, ebenso Mischungen aus mehreren Polyalkylenpolyaminen. Geeignete Polyalkylenpolyamine sind beispielsweise Diethylentriamin, Triethylentetramin, Tetraethylenpentamin, Dipropylentriamin, Tripropylentetramin, Dihexamethylentriamin, Aminopropylethylendiamin und Bis-aminopropylethylendiamin. Die Dicarbonsäuren und Polyalkylenpolyamine werden zur Herstellung der Polyamidoamine auf höhere Temperaturen erhitzt, z.B. auf Temperaturen in dem Bereich von 120 bis 220, vorzugsweise 130 bis 180°C. Das bei der Kondensation entstehende Wasser wird aus dem System entfernt. Bei der Kondensation kann man gegebenenfalls auch Lactone oder Lactame von Carbonsäuren mit 4 bis 8 C-Atomen einsetzen. Pro Mol einer Dicarbonsäure verwendet man beispielsweise 0,8 bis 1,4 Mol eines Polyalkylenpolyamins.

Weitere Aminogruppen enthaltende Polymere sind mit Ethylenimin gepfropfte Polyamidoamine. Sie sind aus den oben beschriebenen Polyamidoaminen durch Umsetzung mit Ethylenimin in Gegenwart von Säuren oder Lewis-Säuren wie Schwefelsäure oder Bortrifluoridetheraten bei Temperaturen von beispielsweise 80 bis 100°C erhältlich. Pro 100 Gewichtsteile eines Polyamidoamins pfropft man beispielsweise 1 bis 100 Gewichtsteile Ethylenimin auf. Vorzugsweise setzt man unvernetzte, gegebenenfalls mit Ethylenimin gepfropfte Polyamidoamine ein. Verbindungen dieser Art werden beispielsweise in der DE-B-24 34 816 beschrieben.

Für die Herstellung von Fixiermitteln kommen als Amino- und/oder Ammoniumgruppen enthaltende Polymere außerdem Poly-diallyldimethylammoniumchloride in Betracht. Polymerisate dieser Art sind ebenfalls bekannt. Man kann sowohl Homopolymerisate oder auch Copolymerisate von Diallyldimethylammoniumchlorid einsetzen. Als Comonomere eignen sich in erster Linie Acrylamid und/oder Methacrylamid in Betracht. Die Copolymerisation kann dabei in jedem beliebigen Monomerverhältnis vorgenommen werden. Der K-Wert der Homo- und Copolymerisate von Diallyldimethylammoniumchloriden beträgt mindestens 30 und liegt vorzugsweise in dem Bereich von 95 bis 180.

Zur Herstellung der Fixiermittel eignen sich als Polymere auch Copolymerisate aus beispielsweise 1 bis 99 Mol-%, vorzugsweise 30 bis 70 Mol-% Acrylamid und/oder Methacrylamid und 99 bis 1 Mol-%, vorzugsweise 70 bis 30 Mol-% Dialkylaminoalkylacrylamid und/oder -methacrylamid. Die basischen Acrylamide und Methacrylamide liegen ebenfalls vorzugsweise in mit Säuren neutralisierter oder in quaternisierter Form vor. Als Beispiele seien genannt N-Trimethylammoniumethylacrylamidchlorid, N-Trimethylammoniumethylmethacrylamidchlorid, Trimethylammoniumethylacrylamidmethosulfat, Trimethylammoniumethylmethacrylamidmethosulfat, N-Ethyldimethylammoniumethylacrylamidethosulfat, N-Ethyldimethylammoniumethylmethacrylamidethosulfat, Trimethylammoniumpropylacrylamidchlorid, Trimethylammoniumpropylmethacrylamidchlorid, Trimethylammoniumpropylacrylamidmethosulfat, Trimethylammoniumpropylmethacrylamidmethosulfat und N-Ethyldimethylammoniumpropylacrylamidethosulfat. Bevorzugt ist Trimethylammoniumpropylmethacrylamidchlorid.

Als Ausgangsstoffe zur Herstellung der Fixiermittel kommen außerdem Copolymerisate aus 1 bis 99 mol-%, vorzugsweise 30 bis 70 mol-% Acrylamid und/oder Methacrylamid und 99 bis 1 mol-%, vorzugsweise 70 bis 30 mol-% Dialkylaminoalkylacrylaten und/oder -methacrylaten in Frage, z.B. Copolymerisate aus Acrylamid und N,N-Dimethylaminoethylacrylat. Basische Acrylate liegen vorzugsweise in mit Säuren neutralisierter oder in quaternisierter Form vor. Die Quaternisierung kann beispielsweise mit Methylchlorid oder mit Dimethylsulfat erfolgen.

Die kationischen Polymerisate haben z.B. K-Werte von 30 bis 300, vorzugsweise 130 bis 180 (bestimmt nach H. Fikentscher in 5 %iger wäßriger Kochsalzlösung bei 25°C und einer Polymerkonzentration von 0,5 Gew.-%). Bei einem pH-Wert von 4,5 haben sie beispielsweise eine Ladungsdichte von mindestens 4 mVal/g Polyelektrolyt.

Als kationische Polymere, die Amino- und/oder Ammoniumgruppen aufweisen, kommen auch Polyallylamine in Betracht. Polymerisate dieser Art werden erhalten durch Homopolymerisation von Allylamin, vorzugsweise in mit Säuren neutralisierter oder in quaternisierter Form oder durch Copolymerisieren von Allylamin mit anderen monoethylenisch ungesättigten Monomeren, die oben als Comonomere für N-Vinylcarbonsäureamiden beschrieben sind.

Die Amino- und/oder Ammoniumgruppen enthaltenden Polymeren werden durch Umsetzung mit Reaktivleimungsmitteln für Papier modifiziert. Unter Reaktivleimungsmitteln für Papier werden beispielsweise Alkyldiketene, Alkenylbernsteinsäureanhydride, Alkylisocyanate oder Chlorameisensäureester von Fettalkoholen, Esteralkoholen und/oder Carbonsäureamidalkoholen verstanden. Für die Herstellung der Fixiermittel geeignete Alkyldiketene können beispielsweise mit Hilfe der folgenden Formel charakterisiert werden: 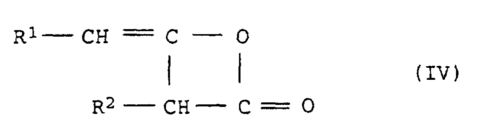 in der
- R¹, R² =: H, C₁- bis C₂₂-Alkyl, C₁₀- bis C₂₂-Alkenyl, C₄- bis C₈-Cycloalkyl, Aryl oder Aralkyl
bedeuten.

R¹ und R² in Formel IV stehen vorzugsweise für gleiche oder verschiedene Alkyl- oder Alkenylreste mit 14 bis 22 C-Atomen. Diese Verbindungen werden in Substanz oder in Form wäßriger Dispersionen bei der Herstellung der Fixiermittel eingesetzt.

Bevorzugte wäßrige Dispersionen von Reaktivleimungsmitteln enthalten als Reaktivleimungsmittel C₁₄- bis C₂₂-Alkyldiketene und als Schutzkolloid Umsetzungsprodukte von Vinylamin-Einheiten enthaltenden Polymerisaten mit Diketenen der Formel IV.

Solche Dispersionen enthalten beispielsweise Stearyldiketen, Lauryldiketen, Palmityldiketen, Oleyldiketen, Behenyldiketen oder deren Gemische als Leimungsmittel und Umsetzungsprodukte von hydrolysierten Polymerisaten von N-Vinylformamid mit Stearyldiketen, Lauryldiketen, Palmityldiketen, Oleyldiketen, Behenyldiketen oder deren Gemische als Schutzkolloid.

Die wäßrigen Dispersionen von Reaktivleimungsmitteln können gegebenenfalls mit anderen Schutzkolloiden stabilisiert sein. Als Schutzkolloide kommen beispielsweise die üblichen wasserlöslichen oder wasserdispergierbaren polymeren Schutzkolloide in Betracht, z.B. kationische, amphotere und/oder anionische Stärke. Die wäßrigen Dispersionen von Reaktivleimungsmitteln enthalten vorzugsweise 10 bis 25 Gew.-% Reaktivleimungsmittel und 1 bis 3,5 Gew.-% mindestens eines Schutzkolloids oder Dispergiermittels wie beispielsweise Ligninsulfonsäure, Kondensate aus Naphthalinsulfonsäure und Formaldehyd, sulfoniertes Polystyrol, C₁₀- bis C₂₂-Alkylsulfonsäuren, C₁₀- bis C₂₂-Alkylschwefelsäuren sowie Salze und Mischungen der genannten Verbindungen. Sie können gegebenenfalls weitere Hilfsstoffe enthalten wie Mono-, Di- und Triglyceride, Fettsäuren sowie deren Ester oder Amide, die in der Literatur als Stabilisatoren für Alkyldiketendispersionen bekannt sind.

Als Reaktivleimungsmittel kommen außerdem cyclische Dicarbonsäureanhydride der Formel 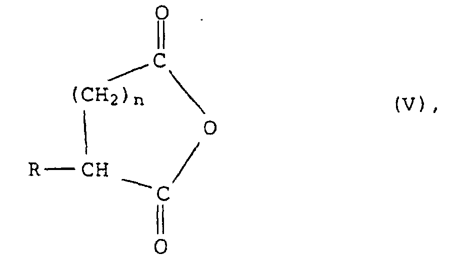 in Betracht, in der
- R =: C₅- bis C₂₂-Alkyl oder C₅- bis C₂₂-Alkenyl und
- n =: 1 oder 2
bedeutet.

Beispiele für Anhydride der Formel V sind Decenylbernsteinsäureanhydrid, Octenylbernsteinsäureanhydrid, Dodecenylbernsteinsäureanhydrid und n-Hexadecenylbernsteinsäureanhydrid.

Weitere geeignete Reaktivleimungsmittel sind organische Isocyanate wie C₁₂- bis C₃₆-Alkylisocyanate, beispielsweise Dodecylisocyanat, Octadecylisocyanat, Tetradecylisocyanat, Hexadecylisocyanat, Eicosylisocyanat, Docosylisocyanat, Decylisocyanat.

Weitere geeignete Reaktivleimungsmittel sind Chlorameisensäureester von Esteralkoholen, Fettalkohole und/Carbonsäureamidalkoholen. Solche Reaktivleimungsmittel werden beispielsweise in der DE-A-33 01 670 beschrieben. Die vorstehend genannten Leimungsmittel wie Alkyldiketene, cyclische Carbonsäureanhydride und organische Isocyanate werden in der DE-B-27 10 061 beschrieben.

Zur Herstellung der erfindungsgemäß als Fixiermittel einzusetzenden Erfindungen setzt man die oben beschriebenen Amino- und/oder Ammoniumgruppen enthaltenden Polymeren mit den als Reaktivleimungsmittel für Papier bekannten Verbindungen im Gewichtsverhältnis Polymer zu Reaktivleimungsmittel von 15 000 : 1 bis 1 : 5, vorzugsweise im Gewichtsverhältnis 1000 : 1 bis 1 : 1 um. Bevorzugt einzusetzende Fixiermittel werden durch Reaktion von unvernetzten Polymeren aus der Gruppe der
- Vinylamineinheiten enthaltenden Polymerisate und/oder
- Polyethylenimine
mit C₁₄- bis C₂₂-Alkyldiketenen, cyclischen C₅- bis C₂₂-Alkylbernsteinsäureanhydriden oder C₅- bis C₂₂-Alkenylbernsteinsäureanhydriden hergestellt. Die Umsetzung der Aminogruppen enthaltenden Polymeren mit den als Reaktivleimungsmitteln bekannten Substanzen erfolgt üblicherweise dadurch, daß man das Reaktivleimungsmittel, eine Lösung oder wäßrige Dispersion eines Reaktivleimungsmittels intensiv mit einer wäßrigen Lösung eines Amino- und/oder Ammoniumgruppen enthaltenden Polymeren bei Temperaturen von beispielsweise 20 bis 100°C, vorzugsweise 40 bis 70°C vermischt und die Reaktion solange ablaufen läßt, bis das eingesetzte Reaktivleimungsmittel abreagiert hat. Die so erhältlichen Umsetzungsprodukte werden als Fixiermittel bei der Herstellung von Papier, Pappe und Karton eingesetzt. Bezogen auf trockenen Papierstoff verwendet man die Fixiermittel in einer Menge von beispielsweise 0,01 bis 2 %, vorzugsweise 0,02 bis 1 Gew.-%. Überraschenderweise erhält man mit den erfindungsgemäß einzusetzenden Fixiermitteln eine gegenüber dem Stand der Technik deutlich verbesserte Fixierung von wasserlöslichen und wasserunlöslichen Störstoffen im Papier.

In einer bevorzugten Ausführungsform des erfindungsgemäßen Verfahrens erfolgt das Entwässern des Papierstoffs zusätzlich in Gegenwart eines Retentionsmittels. Neben anionischen Retentionsmitteln oder nichtionischen Retentionsmitteln wie Polyacrylamiden werden bevorzugt kationische Polymere als Retentions- und als Entwässerungshilfsmittel eingesetzt. Dadurch wird eine signifikante Verbesserung der Runnability der Papiermaschinen erreicht. Als kationische Retentionsmittel kann man sämtliche dafür im Handel erhältlichen Produkte verwenden. Hierbei handelt es sich beispielsweise um kationische Polyacrylamide, Polydiallyldimethylammoniumchloride, Polyethylenimine, Polyamine mit einer Molmasse von mehr als 50 000, Polyamine, die gegebenenfalls durch Aufpfropfen von Ethylenimin modifiziert sind, Polyetheramide, Polyvinylimidazole, Polyvinylpyrrolidine, Polyvinylimidazoline, Polyvinyltetrahydropyrine. Poly(dialkylaminoalkylvinylether), Poly(dialkylaminoalkyl(meth)acrylate) in protonierter oder in quaternierter Form sowie um Polyamidoamine aus Adipinsäure und Polyalkylenpolyaminen wie Diethylentriaminamin, die mit Ethylenimin gepfropft und mit Polyethylenglykoldichlorhydrinethern gemäß der Lehre der DE-B-24 34 816 vernetzt sind oder um Polyamidoamine, die mit Epichlorhydrin zu wasserlöslichen Kondensationsprodukten umgesetzt sind sowie um Copolymerisate von Acrylamid oder Methacrylamid und Dialkylaminoethylacrylaten oder -methacrylaten, beispielsweise Copolymerisate aus Acrylamid und Dimethylaminoethylacrylat in Form des Salzes mit Salzsäure oder in mit Methylchlorid quaternierter Form.

Die kationischen Polymerisate, die als Retentionsmittel eingesetzt werden, haben K-Werte nach Fikentscher von mindestens 140 (bestimmt in 5 %iger wäßriger Kochsalzlösung bei einer Polymerkonzentration von 0,5 Gew.-%, einer Temperatur von 25°C und einem pH-Wert von 7).

Das Entwässern des Papierstoffs in Gegenwart der erfindungsgemäß zu verwendenden Fixiermittel erfolgt vorzugsweise zusätzlich in Gegenwart von
- Vinylamineinheiten enthaltenden Polymerisaten
- mit Ethylenimin gepfropften und vernetzten Polyamidoaminen
- Polyacrylamiden und/oder
- Polydiallyldimethylammoniumchloriden
als Retentionsmittel. Die Retentionsmittel werden dabei vorzugsweise in Mengen von 0,01 bis 0,2 Gew.-%, bezogen auf trockenen Papierstoff, angewendet. Das Verhältnis von Fixiermittel zu Retentionsmittel beträgt beispielsweise 1 : 2 bis 5 : 1. Gegenüber herkömmlichen Kombinationen aus Fixiermitteln und kationischen Retentionsmitteln erhält man nach dem erfindungsgemäßen Verfahren eine verbesserte Retention und eine beschleunigte Entwässerung des Papierstoffs.

Falls nicht anders angegeben, bedeuten die Prozentangaben in den Beispielen Gew.-%. Die K-Werte wurden nach H. Fikentscher, Cellulose-Chemie, Bd. 13, 58-64 und 71-74 (1932) in 5 %iger wäßriger Kochsalzlösung bei einer Temperatur von 25°C und einem pH-Wert von 7 bei einer Polymerkonzentration von 0,5 Gew.-% bestimmt. Die Molmassen der Polymeren wurden durch Lichtstreuung gemessen.

Der chemische Sauerstoffbedarf (CSB-Wert) wurde nach DIN 38 409 bestimmt. Die Lichtdurchlässigkeit (optische Durchlässigkeit) des Siebwassers wurde mit einem Dr. Lange-Photometer bei einer Wellenlänge von 588 nm gemessen. Sie ist ein Maß für die Retention von Fein- und Füllstoffen und wird in % angegeben. Je höher der Wert für die Lichtdurchlässigkeit ist, desto besser ist die Retention.

### Herstellung der Fixiermittel

### Fixiermittel 1

In einem 2 l fassenden Kolben, der mit einem Rührer und einem Thermometer ausgestattet ist, werden 500 g einer wäßrigen Polyethyleniminlösung mit einem Feststoffgehalt von 49 % und einem mittleren Molekulargewicht von 750 000 vorgelegt und auf 70°C erwärmt. Anschließend fügt man unter intensivem Rühren 1,78 g Stearyldiketen hinzu und rührt das Gemisch danach noch 1 h bei 70°C, kühlt es Raumtemperatur ab und stellt durch Zugabe von Ameisensäure einen pH-Wert von 7 ein. Man erhält eine 49,1 %ige wäßrige Lösung mit einer Viskosität von 754 mPas.

### Fixiermittel 2

In einer Rührapparatur, die mit einem Rückflußkühler, Thermometer und Tropftrichter ausgestattet ist, werden 1000 g einer wäßrigen Lösung von Polyvinylformamid mit einem Polymergehalt von 16,5 % vorgelegt und unter intensivem Rühren auf 80°C aufgeheizt. Der K-Wert des Polyvinylformamids betrug 87 (Mw ≈ 250 000, ≈ 2321 mmol Vinylformamideinheiten). Im Verlauf von 20 min werden 102 g (ca. 1275 mmol) 50 %ige wäßrige Natronlauge zugetropft. Danach wird das Reaktionsgemisch noch 1 h bei einer Temperatur von 80°C gerührt. Nach dem Abkühlen auf Raumtemperatur wird die Lösung dialytisch vom Natriumformiat befreit und destillativ eingeengt. Man erhält 1120 g einer wäßrigen Polymerlösung mit einem Polymergehalt von 11,4 %. Das Polymer enthält 57 mol-% Vinylamin- und 43 mol-% Vinylformamideinheiten.

600 g der oben beschriebenen Polymerlösung werden in einer Rührapparatur vorgelegt, auf pH von 9 eingestellt und auf eine Temperatur von 80°C erwärmt. Sobald diese Temperatur erreicht ist, tropft man 4,40 g Stearyldiketen in Form einer Schmelze zu. Die Mischung wird danach noch 2 h bei 80°C gerührt und dann auf Raumtemperatur abgekühlt. Man erhält eine 12 %ige wäßrige Lösung mit einer Viskosität von 1065 mPas.

### Fixiermittel 3

Wie bei der Herstellung von Fixiermittel 2 beschrieben, legt man in einer Rührapparatur 1000 g einer wäßrigen Polyvinylformamidlösung mit einem Polymergehalt von 16,5 Gew.-% und einem K-Wert des Polymerisats von 87 vor und gibt 204 g 50 %ige wäßrige Natronlauge zur Abspaltung der Formylgruppen aus dem Polymeren zu. Die Reaktionszeit beträgt 2 h bei 80°C. Dann wird die Lösung auf Raumtemperatur abgekühlt, mittels Dialyse von Natriumformiat befreit und destillativ eingeengt. Man erhält 1390 g einer Polymerlösung mit einem Polymergehalt von 7,4 %. Das Polymer ist zu 95 % hydrolysiert und enthält somit 95 % Vinylamin- und 5 mol-% Vinylformamideinheiten.

600 g der oben beschriebenen Polymerlösung werden auf einen pH-Wert von 9 eingestellt und unter Rühren auf eine Temperatur von 80°C erwärmt. Sobald diese Temperatur erreicht ist, fügt man 4,60 g Stearyldiketen als Schmelze zu. Die Mischung wird danach noch 2 h bei 80°C gerührt und anschließend auf Raumtemperatur abgekühlt. Man erhält eine 8 %ige wäßrige Lösung mit einer Viskosität von 912 mPas.

### Fixiermittel 4

In einem 2 l fassenden Kolben, der mit einem Rührer und einem Thermometer ausgestattet ist, werden 600 g einer wäßrigen Polyethylenimin-Lösung mit einem Feststoffgehalt von 49 % und einem mittleren Molekulargewicht von 750 000 vorgelegt und auf 50°C erwärmt. Anschließend fügt man unter intensivem Rühren 56 g einer wäßrigen 2 %igen Dispersion von Octadecenylbernsteinsäureanhydrid zu und rührt das Reaktionsgemisch noch 1 h bei 50°C. Danach kühlt man die Mischung ab und gibt soviel Ameisensäure zu, bis der pH-Wert 7 beträgt. Man erhält eine 44,9 %ige wäßrige Lösung mit einer Viskosität von 1045 mPas.

### Fixiermittel 5

In einem 2 l fassenden Kolben, der Rührer und Thermometer ausgestattet ist, werden 600 g einer wäßrigen Polyethyleniminlösung mit einem Feststoffgehalt von 49 % und einem mittleren Molekulargewicht von 750 000 vorgelegt und auf 50°C erwärmt. Sobald diese Temperatur erreicht ist, fügt man unter intensivem Rühren 17,8 g einer 10 %igen wäßrigen Dispersion von Stearyldiketen hinzu und rührt das Reaktionsgemisch noch 1 h bei 50°C. Danach wird es abgekühlt und durch Zugabe von Ameisensäure auf einen pH-Wert von 7 eingestellt. Man erhält eine 47,5 %ige wäßrige Lösung mit einer Viskosität von 598 mPas.

### Vergleichsbeispiel 1 (gemäß Beispiel 1 der WO-A-94/12560)

### Fixiermittel 6

In einem Kolben, der mit Rührer, Thermometer und einer Einrichtung zum Arbeiten unter Stickstoff ausgerüstet ist, werden 799 g eines wasserfreien Polyethylenimins mit einem mittleren Molekulargewicht von 25 000 vorgelegt und unter einem Stickstoffstrom auf eine Temperatur von 140°C erhitzt. Innerhalb von 30 min fügt man 69 g Propionsäure zu. Die Temperatur wird danach auf 180°C erhöht. Das bei der Reaktion entstehende Wasser wird kontinuierlich über einen Zeitraum von 5 h abgetrennt. 200 g des auf diese Weise hergestellten Polymers wird mit 700 ml Wasser verdünnt und auf 70°C erhitzt. Dann fügt man im Verlauf von 3 h portionsweise 36,5 ml einer 21 %igen wäßrigen Lösung eines Bis-Chlorhydrinpolyethylenglykols vom Molekulargewicht 400 zu. Das Reaktionsgemisch wird nach Zugabe des Vernetzers noch 1 h bei 70°C gerührt und dann durch Zugabe von 85 g einer 85 %igen Ameisensäure auf einen pH-Wert von 8 eingestellt. Man erhält 1018 g einer 20,7 %igen Polymerlösung mit einer Viskosität von 884 mPas.

### Beispiele

### Beispiele 1 bis 5

Eine wäßrige Faseraufschlämmung aus TMP (thermomechanische Pulpe) mit einer Stoffkonzentration von 2 % wurde in gleiche Anteile geteilt und jeweils mit einer wäßrigen Lösung von 5 % Huminsäure als Störstoff versetzt.

Zu Proben dieser Pulpe gab man jeweils die in Tabelle 1 angegebenen Mengen an Fixiermitteln 1 bis 6 sowie zusätzlich noch jeweils 0,2 Gew.-%, bezogen auf trockenen Faserstoff, eines kationischen Polyacrylamids mit einem K-Wert von 240 als Retentionsmittel. Nach Durchmischen und Filtrieren des geflockten Papierstoffs wird die Extinktion des alkalischen Filtrats bei einer Wellenlänge von 340 nm bestimmt. Die Ergebnisse sind in Tabelle 1 angegeben.

**Tabelle 1**

| Beispiel | 0,05 % | Extinktion | 0,1 % | Extinktion |
|---|---|---|---|---|
| 1 | Fixiermittel 1 | 0,30 | Fixiermittel 1 | 0,19 |
| 2 | Fixiermittel 2 | 0,38 | Fixiermittel 2 | 0,16 |
| 3 | Fixiermittel 3 | 0,30 | Fixiermittel 3 | 0,17 |
| 4 | Fixiermittel 4 | 0,40 | Fixiermittel 4 | 0,22 |
| 5 | Fixiermittel 5 | 0,20 | Fixiermittel 5 | 0,27 |
| Vergl. -Beispiel 1 | Fixiermittel 6 | 0,49 | Fixiermittel 6 | 0,26 |

### Vergleichsbeispiel 2

Der huminsäurehaltige Papierstoff wurde direkt filtriert, d.h. in Abwesenheit von Fixiermitteln und Retentionsmitteln. Die Extinktion des Filtrats betrug 1,20.

### Beispiele 6 bis 10

Eine wäßrige Faseraufschlämmung aus TMP (thermomechanische Pulpe) mit einer Stoffkonzentration von 2 % wurde in gleiche Anteile geteilt und jeweils mit einem Holzextrakt (2 ml/75 ml TMP) als Störstoff versetzt. Zu Proben dieser Pulpe gab man jeweils die in Tabelle 2 angegebenen Mengen an Fixiermitteln und danach jeweils, bezogen auf trockenen Faserstoff 0,2 % eines handelsüblichen kationischen Polyacrylamids mit einem K-Wert von 240 als Retentionsmittel. Nach Durchmischen und Filtrieren des geflockten Papierstoffs wird die Extinktion des alkalischen Filtrats bei 340 nm bestimmt. Die Ergebnisse sind in Tabelle 2 angegeben.

**Tabelle 2**

| Beispiel | Fixiermittel | Dosierung von ... Fixiermittel (100 % gerechnet) | | | |
|---|---|---|---|---|---|
| | | 0 % | 0,03 % | 0,05 % | 0,1 % |
| 6 | 1 | 1,20 | 0,37 | 0,35 | 0,30 |
| 7 | 2 | 1,21 | 0,33 | 0,32 | 0,22 |
| 8 | 3 | 1,18 | 0,42 | 0,35 | 0,28 |
| 9 | 4 | 1,20 | 0,44 | 0,39 | 0,29 |
| 10 | 5 | 1,20 | 0,28 | 0,24 | 0,20 |
| Vergl. Beisp. 3 | 6 | 1,19 | 0,45 | 0,42 | 0,33 |

### Vergleichsbeispiel 4

Der in den Beispielen 6 bis 10 beschriebene Papierstoff wird ohne weitere Zusätze entwässert. Die Extinktion des alkalischen Filtrats betrug 0,51.

### Beispiele 11 bis 15

Zu Proben einer wäßrigen Faseraufschlämmung aus TMP (thermomechanische Pulpe) mit einer Stoffkonzentration von 2 % fügte man eine wäßrige Dispersion von gestrichenem Ausschuß in einer Menge von 0,15 g/l als Störstoff (Sticky-Störstoff). Zu Proben dieser Pulpe gab man dann jeweils die in der Tabelle 3 angegebenen Mengen an Fixiermitteln sowie, bezogen auf trockenen Faserstoff 0,2 % eines handelsüblichen kationischen Polymeren mit einem K-Wert von 240 als Retentionsmittel zu. Nach dem Durchmischen und Filtrieren des geflockten Papierstoffs bestimmt man im Filtrat mit Hilfe einer laseroptischen Methode die Anzahl der Partikeln, vgl. Nordic Pulp & Paper Research Journal, No. 1-1994, 9 (1994) S. 26 bis 30, 36). Die dabei erhaltenen Ergebnisse sind in der Tabelle angegeben.

**Tabelle 3**

| Beispiel | Fixiermittel | Dosierung von ... % Fixiermittel (100 %) | | | | |
|---|---|---|---|---|---|---|
| | | 0 % | 0,01 % | 0,02 % | 0,05 % | 0,1 % |
| 11 | 1 | 100 | 77 | 63 | 18 | 2 |
| 12 | 2 | 100 | 69 | 42 | 27 | 7 |
| 13 | 3 | 100 | 78 | 47 | 14 | 8 |
| 14 | 4 | 100 | 89 | 52 | 24 | 10 |
| 15 | 5 | 100 | 68 | 45 | 19 | 7 |
| Vergl. Beisp. 5 | 6 | 100 | 91 | 61 | 33 | 62 |

## Patentansprüche

1. Verfahren zur Herstellung von Papier, Pappe und Karton durch Entwässern eines Störstoffe enthaltenden Papierstoffs in Gegenwart von Fixiermitteln, **dadurch gekennzeichnet, daß** man als Fixiermittel Umsetzungsprodukte einsetzt, die durch Reaktion von unvernetzten Amino- und/oder Ammoniumgruppen enthaltenden Polymeren aus der Gruppe der
- Vinylamineinheiten enthaltenden Polymerisate
- Polyalkylenpolyamine
- Polyamidoamine
- mit Ethylenimin gepfropften Polyamidoamine,
- Polydiallyldimethylammoniumchloride
- Dialkylaminoalkylacrylamid-Einheiten oder Dialkylaminomethacrylamid-Einheiten enthaltenden Polymeren und
- Polyallylamine und
- Dicyandiamid-Formaldehyd-Kondensate
mit Reaktivleimungsmitteln für Papier im Gewichtsverhältnis Polymer zu Reaktivleimungsmittel von 15 000 : 1 bis 1 : 5 erhältlich sind.

2. Verfahren nach Anspruch 1, **dadurch gekennzeichnet, daß** man als Fixiermittel Umsetzungsprodukte einsetzt, die durch Reaktion der Aminogruppen enthaltenden Verbindungen mit Reaktivleimungsmitteln im Gewichtsverhältnis 1000 : 1 bis 1 : 1 erhältlich sind

3. Verfahren nach Anspruch 1 oder 2, **dadurch gekennzeichnet, daß** man als Reaktivleimungsmittel Alkyldiketene, Alkenylbernsteinsäureanhydride, Alkylisocyanate oder Chlorameisensäureester von Fettalkoholen, Esteralkoholen und/oder Carbonsäureamidalkoholen einsetzt.

4. Verfahren nach einem der Ansprüche 1 bis 3, **dadurch gekennzeichnet, daß** man das Entwässern des Papierstoffs zusätzlich in Gegenwart eines Retentionsmittels vornimmt.

5. Verfahren nach einem der Ansprüche 1 bis 4, **dadurch gekennzeichnet, daß** man als Fixiermittel Umsetzungsprodukte eingesetzt, die durch Reaktion von
- Vinylamineinheiten enthaltenden Polymerisaten und/oder
- Polyethyleniminen
mit C₁₄- bis C₂₂-Alkyldiketenen, cyclischen C₅- bis C₂₂-Alkylbernsteinsäureanhydriden oder C₅- bis C₂₂-Alkenylbernsteinsäureanhydriden erhältlich sind.

6. Verfahren nach einem der Ansprüche 1 bis 5, **dadurch gekennzeichnet. daß** man das Entwässern des Papierstoffs zusätzlich in Gegenwart von
- Vinylamineinheiten enthaltenden Polymerisaten
- mit Ethylenimin gepfropften und vernetzten Polyamidoaminen
- Polyacrylamiden und/oder
- Polydiallyldimethylammoniumchloriden
als Retentionsmittel durchführt.

7. Verwendung von Umsetzungsprodukten, die durch Reaktion von unvernetzten Amino- und/oder Ammoniumgruppen enthaltenden Polymeren aus der Gruppe der
- Vinylamineinheiten enthaltenden Polymerisate
- Polyalkylenpolyamine
- Polyamidoamine
- mit Ethylenimin gepfropften Polyamidoamine,
- Polydiallyldimethylammoniumchloride
- Dialkylaminoalkylacrylamid-Einheiten oder Dialkylaminomethacrylamid-Einheiten enthaltenden Polymeren und
- Polyallylamine und
- Dicyandiamid- und Formaldehyd-Kondensate
mit Reaktivleimungsmitteln für Papier im Gewichtsverhältnis Polymer zu Reaktivleimungsmittel von 15 000 : 1 bis 1 : 5 erhältlich sind, als Fixiermittel für wasserlösliche und für wasserunlösliche Störstoffe bei der Herstellung von Papier, Pappe und Karton aus Störstoffe enthaltenden Papierstoffen.

## Claims

1. A process for the production of paper, board and cardboard by draining a paper stock, containing interfering substances, in the presence of fixing agents, wherein the fixing agents used are reaction products which are obtainable by reacting uncrosslinked amino- or ammonium-containing polymers selected from the group consisting of the
- polymers containing vinylamine units
- polyalkylenepolyamines
- polyamidoamines
- ethyleneimine-grafted polyamidoamines
- polydiallyldimethylammonium chlorides
- polymers containing dialkylaminoalkylacrylamide units or dialkylaminoalkylmethacrylamide units and
- polyallylamines and
- dicyandiamide and formaldehyde condensates
with reactive sizes for paper in a weight ratio of polymer to reactive size of from 15,000 : 1 to 1 : 5.

2. The process as claimed in claim 1, wherein the fixing agents used are reaction products which are obtainable by reacting amino-containing compounds with reactive sizes in a weight ratio of from 1000 : 1 to 1 : 1.

3. The process as claimed in claim 1 or 2, wherein the reactive sizes used are alkyldiketenes, alkenylsuccinic anhydrides, alkyl isocyanates or chloroformic esters of fatty alcohols, ester alcohols or carboxamido alcohols.

4. The process as claimed in any of claims 1 to 3, wherein the drainage of the paper stock is additionally carried out in the presence of a retention aid.

5. The process as claimed in any of claims 1 to 4, wherein the fixing agents used are reaction products which are obtainable by reacting
- Polymers containing vinylamine units or
- Polyethyleneimines
with C₁₄-C₂₂-alkyldiketenes, cyclic C₅-C₂₂-alkylsuccinc anhydrides or C₅-C₂₂-alkenylsuccinic anhydrides.

6. The process as claimed in any of claims 1 to 5, wherein the drainage of the paper stock is additionally carried out in the presence of
- polymers containing vinylamine units
- ethyleneimine-grafted and crosslinked polyamidoamines
- polyacrylamides or
- polydiallyldimethylammonium chlorides
as retention aids.

7. The use of reaction products which are obtainable by reacting uncrosslinked amino- or ammonium-containing polymers selected from the group consisting of the
- polymers containing vinylamine units
- polyalkylenepolyamines
- polyamidoamines
- ethyleneimine-grafted polyamidoamines
- polydiallyldimethylammonium chlorides
- polymers containing dialkylaminoalkylacrylamide units or dialkylaminoalkylmethacrylamide units and
- polyallylamines and
- dicyandiamide and formaldehyde condensates
with reactive sizes for paper in a weight ratio of polymer to reactive size of from 15,000 : 1 to 1 : 5, as fixing agents for water-soluble and for water-insoluble interfering substances in the production of paper, board and cardboard from paper stocks containing interfering substances.

## Revendications

1. Procédé de préparation de papier, de carton-pâte et de carton par déshydratation d'une pâte à papier contenant des substances perturbatrices en présence d'agents de fixation, **caractérisé en ce que**, comme agents de fixation, on met en oeuvre des produits de réaction qui peuvent être obtenus par réaction de polymères non réticulés, contenant des groupes amino et/ou ammonium, du groupe
- des polymères contenant des unités vinylamine,
- des polyalkylènepolyamines,
- des polyamidoamines,
- des polyamidoamines greffées avec de l'éthylèneimine,
- des chlorures de polydiallyldiméthyl-ammonium,
- des polymères contenant des unités de dialkylaminoalkylacrylamide ou des unités de dialkylaminométhacrylamide,
- des polyallylamines, et
- des produits de condensation de dicyandiamineformaldéhyde,
avec des agents d'encollage réactifs pour du papier, dans un rapport pondéral entre polymère et agent d'encollage réactif de 15.000/1 à 1/5.

2. Procédé suivant la revendication 1, **caractérisé en ce que**, comme agents de fixation, on met en oeuvre des produits de réaction qui peuvent être obtenus par réaction des composés contenant des groupes amino avec des agents d'encollage réactifs dans un rapport pondéral de 1000/1 à 1/1.

3. Procédé suivant l'une des revendications 1 et 2, **caractérisé en ce que**, comme agents d'encollage réactifs, on met en oeuvre des alkyldicétènes, des anhydrides d'acide alcénylsuccinique, des isocyanates d'alkyle ou des esters chloroformiques d'alcools gras, des esters-alcools et/ou des alcools d'amide d'acide carboxylique.

4. Procédé suivant l'une des revendications 1 à 3, **caractérisé en ce qu'**on effectue la déshydratation de la pâte à papier en supplément en présence d'un agent de rétention.

5. Procédé suivant l'une des revendications 1 à 4, **caractérisé en ce que**, comme agents de fixation, on met en oeuvre des produits de réaction qui peuvent être obtenus par réaction
- de polymères contenant des unités vinylamine et/ou
- des polyéthylèneimines,
avec des C₁₄-C₂₂-alkyldicétènes, des anhydrides d'acide C₅-C₂₂-alkylsuccinique cycliques ou des anhydrides d'acide C₅-C₂₂-alcénylsuccinique.

6. Procédé suivant l'une des revendications 1 à 5, **caractérisé en ce qu'**on effectue la déshydratation de la pâte à papier en supplément en présence
- de polymères contenant des unités vinylamine,
- des polyamidoamines réticulées et greffées avec de l'éthylèneimine,
- des polyacrylamides, et/ou
- des chlorures de polydiallyldiméthyl-ammonium,
comme agents de rétention.

7. Utilisation de produits de réaction, qui peuvent être obtenus par réaction de polymères non réticulés, contenant des groupes amino et/ou ammonium, du groupe
- des polymères contenant des unités vinylamine,
- des polyalkylènepolyamines,
- des polyamidoamines,
- des polyamidoamines greffées avec de l'éthylèneimine,
- des chlorures de polydiallyldiméthyl-ammonium,
- des polymères contenant des unités de dialkylaminoalkylacrylamide ou des unités de dialkylaminométhacrylamide,
- des polyallylamines, et
- des produits de condensation de dicyandiamine-formaldéhyde,
avec des agents d'encollage réactifs pour du papier, dans un rapport pondéral entre polymère et agent d'encollage réactif de 15.000/1 à 1/5, comme agents de fixation pour des substances perturbatrices solubles dans l'eau et insolubles dans l'eau au cours de la fabrication de papier, de carton-pâte et de carton à partir de pâtes à papier contenant des substances perturbatrices.
